# EUROPEAN PATENT SPECIFICATION

(11) **EP 1 721 784 B1**
(45) Date of publication and mention of the grant of the patent: **27.08.2008**
(21) Application number: 06075925.5
(22) Date of filing: 20.04.2006
(51) Int. Cl.: B60R 11/02, H01Q 1/32

(54) **Vehicular entertainment module**
Fahrzeugunterhaltungsmodul
Module de divertissement pour véhicule

(30) Priority: 09.05.2005 US 125060
(43) Date of publication of application: 15.11.2006
(73) Proprietor: Delphi Technologies, Inc., Troy, Michigan 48007 (US)
(72) Inventor: Davis, J. Roger, Russiaville, IN 46979 (US); Dockemeyer, Joseph R. Jr., Kokomo, IN 49601 (US); Dyson, William E., Carmel, IN 46032 (US); Long, Jerral A., Kokomo, IN 46902 (US); Borders, Douglas G., Kokomo, IN 46901 (US)
(74) Representative: Denton, Michael John

(56) References cited:
- EP-A- 1 492 195
- US-A- 5 801 751
- US-A- 6 118 410
- US-A1- 2003 091 069
- US-A1- 2004 056 811
- US-B1- 6 742 185

## Description

### TECHNICAL FIELD

The invention relates to a vehicular entertainment module with an audio/video input device(s) integrated with a satellite audio and video device.

### BACKGROUND OF THE INVENTION

It is known in the art that vehicles currently employ various entertainment systems for the enjoyment of the vehicle operator and passengers. For example, some vehicles may employ satellite digital audio radio services, which has been commonly referred to in the art as "SDARS." SDARS typically offers a digital broadcast of audio from satellites in either a geo-stationary orbit or a highly elliptical orbit that receive up-linked programming, which, in turn, is re-broadcasted directly to vehicle receivers that subscribe to the service. In another example, vehicles are also being manufactured with rear seat entertainment systems that employ a screen for viewing broadcast television or movies from a digital video disc (DVD).

A vehicle employing such dissimilar audio and video systems require individual control circuitry, software, power supplies, memory, vehicle interface connectors, casings, and dedicated vehicle harnessing for each system. Accordingly, complexity in the wiring, costs of material, and costs of installation are incurred when dissimilar systems are employed in the vehicle. Accordingly, a need therefore exists to reduce system cost and complexity of dissimilar audio and video systems employed in a vehicle.

US 2003/0091069 A1 discloses a vehicular entertainment module comprising a video screen and audio reproducing devices, an audio/video input device that processes media input by a user, and a satellite antenna for receiving satellite signals. An input mixer establishes connections between a given source and a channel provided by a multi-channel receiver/amplifier.

### Summary Of The Invention

A vehicular entertainment module in accordance with the present invention comprises the features defined in claim 1.

### BRIEF DESCRIPTION OF THE DRAWINGS

The inventors of the present invention have recognized these and other problems associated with dissimilar audio and video systems employed in a vehicle. The present invention will now be described, by way of example, with reference to the accompanying drawings, in which:
Figure 1 is a graphical representation of a vehicular entertainment module according to an embodiment;
Figure 2 is a graphical representation of a vehicular entertainment module according to another embodiment; and
Figure 3 is a graphical representation of a vehicular entertainment module according to another embodiment.

### DESCRIPTION OF THE PREFERRED EMBODIMENT

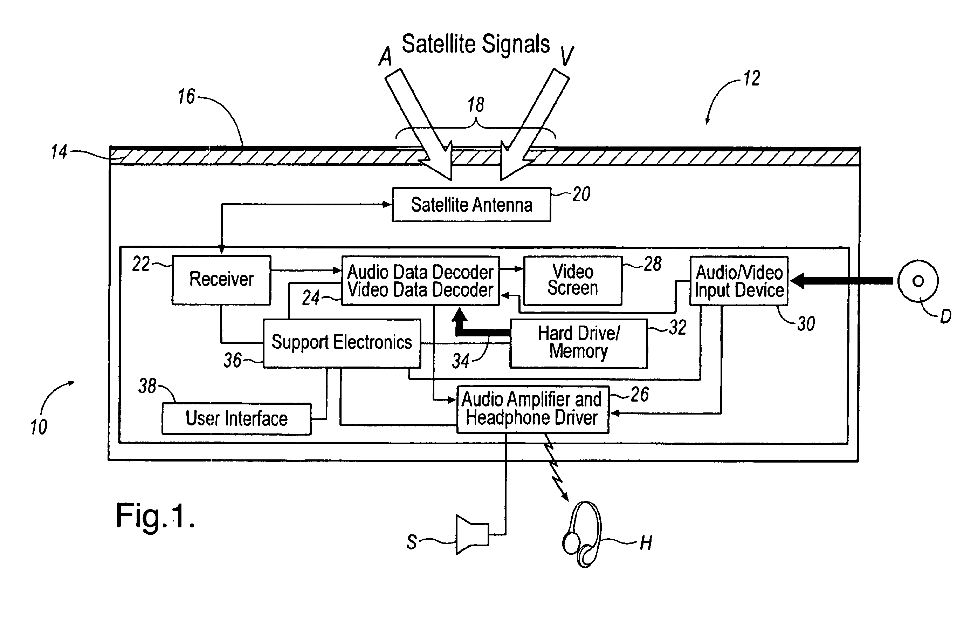

The above-described disadvantages are overcome and a number of advantages are realized by an inventive vehicular entertainment module, which is shown generally at 10, 100, 200 in Figures 1-3, respectively. In general, the vehicular entertainment module 10, 100, 200 employs audio and video entertainment features in one, stand-alone unit. According to a first aspect of the invention, the vehicular entertainment module 10, 100, 200 provides audio and video entertainment emanating from external media, such as a cassette, video game programming, a DVD, or compact disc (CD) that is manually placed into the vehicular entertainment module 10, 100, 200. According to another aspect of the invention, the vehicular entertainment module 10, 100, 200 provides audio and video entertainment emanating from a satellite broadcast that is received by a satellite antenna. Accordingly, cost and design complexity is reduced by sharing components and subsystems in an integrated unit that are otherwise utilized on an individual basis as employed in the prior art.

Referring initially to Figure 1, the vehicular entertainment module 10 is located adjacent a vehicular roof 12 including a headliner 14, an outer metallic portion 16, and an outer non-metallic portion 18. As illustrated, a satellite antenna 20 is integrally located within the vehicular entertainment module 10 and is positioned proximate the outer non-metallic portion 18 of the vehicle roof 12 to permit reception of satellite audio signals, A, and satellite video signals, V. The headliner 14 also comprises a non-metallic material, and, accordingly, the satellite audio signals, A, and satellite video signals, V, are permitted to pass there-through as well. Upon receiving the satellite audio and video signals, A, V, at the satellite antenna 20, a receiver 22 passes the satellite audio and video signals, A, V, to an audio and video data decoder 24 for decoding the satellite audio and video signals, A, V, prior to being output at an audio amplifier & headphone driver 26 and a video screen 28, respectively. As illustrated, the audio amplifier & headphone driver 26 provides an audible output to speakers, S, and/or hardwired or wireless headphones, H.

As illustrated, the vehicular entertainment module 10 also includes an audio/video input device 30, such as a DVD player or video game console, for providing audio output by way of audio reproducing devices (e.g. speakers/headphones, S, H), and video output to the video screen 28 upon inserting the media, such as a DVD or video game programming, which is shown generally at D, into the vehicular entertainment module 10. The vehicular entertainment module 10 may also include a hard drive/memory 32 that provides saved audio and video information, which is shown generally at 34, to the audio and video data decoder 24. The saved audio and video information 34 may be, for example, downloaded audio or video from the satellite audio and video, A, V, or, alternatively, the saved audio and video information 34 may be, for example, preprogrammed onto the hard drive/memory 32. The audio and video data decoder 24 may include a single processor that decodes audio and video originating from the audio/video input device 30, the satellite audio signals, A, and the satellite video signals, V.

The vehicular entertainment module 10 also includes shared support electronics 36 for operating the receiver 22, the audio and video data decoder 24, the audio/video input device 30, and the hard drive/memory 32. The support electronics 36 may include a microcontroller, software blocks, memory, a vehicle communication interface, power supplies, a vehicle connector interface, a cooling device, and the like. A user interface 38 may also communicate with the support electronics 36 for operating the vehicular entertainment module 10. The user interface 38 may include, for example, buttons, lights, and a display screen; if desired, the video screen 28 may be employed as the display screen for the user interface 38.

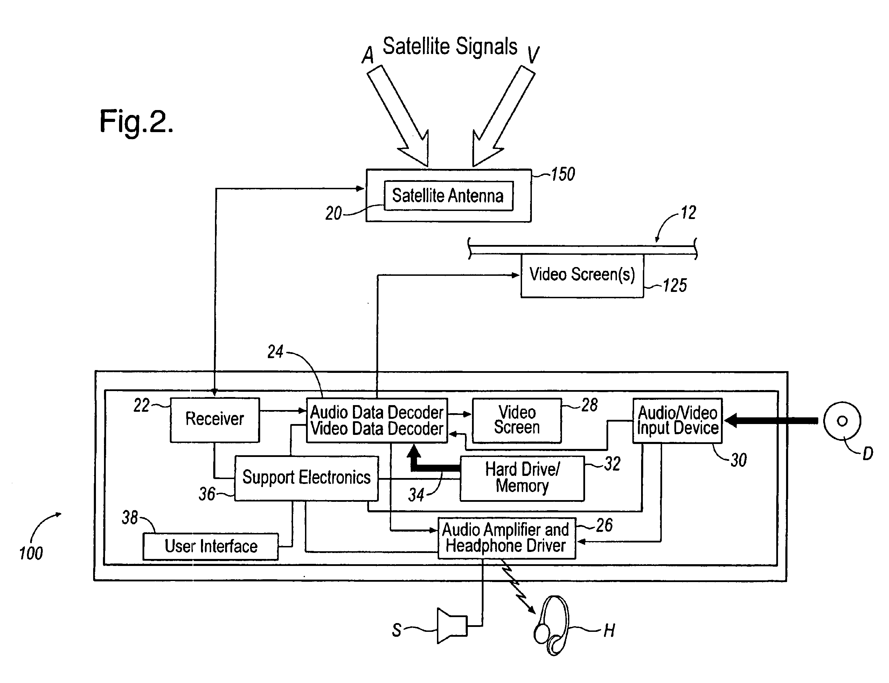

Referring to Figure 2, the vehicular entertainment module 100 operates on the same principles and includes the same components described in Figure 1. As illustrated in Figure 2, the satellite antenna 20 is shown in a remote location 150 from the vehicular entertainment module 100. The satellite antenna 20 may be positioned at any desirable remote location 150 about the vehicle, such as, for example, under a trunk lid, behind an instrument panel, within a side-view mirror housing, an exterior mounting on the vehicle roof, or the like. Even further the location of the vehicular entertainment module 100 may not necessarily be adjacent a vehicle roof 12 as described in Figure 1. For example, the vehicular entertainment module 100 may be located within or proximate to a rear seat center console such that the video screen 28 is located closer to the floor-pan of the vehicle. Accordingly, remotely-located video screens 125 may be located anywhere within the vehicle, such as, for example, adjacent the vehicle roof 12 so that occupants in a third or fourth row seating position may view the video contents being processed by the vehicular entertainment module 100.

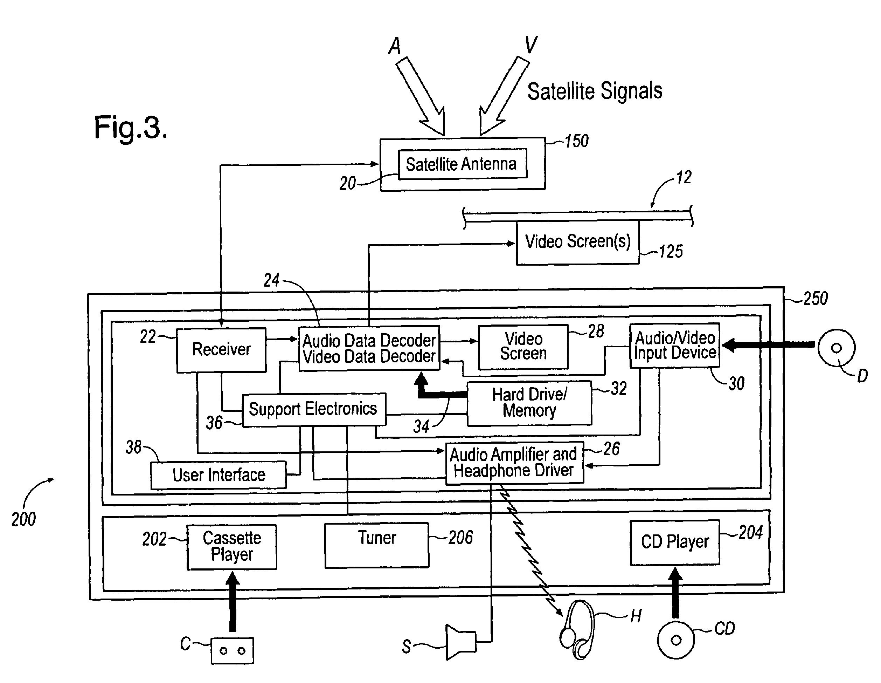

Referring to Figure 3, the vehicular entertainment module 200 operates on the same principles and includes the same components described in Figures 1 and 2. As illustrated in Figure 3, the vehicular entertainment module 200 is located within a head unit 250 proximate a dashboard area. As illustrated, the head unit 250 includes other input audio devices, such as, for example, a cassette player 202 and a CD player 204 that accepts a cassettes, C, and/or a compact disc, CD, input by a user. In addition to the cassette and CD player 202, 204, the head unit 250 also includes a tuner 206 for tuning audio being broadcast on any desirable band, such as, for example, AM/FM (i.e., the 540-1700 kHz and 88.1-107.9 MHz bands) and DAB (i.e., digital audio broadcast on the 174-240MHz and 1452-1492MHz bands). Even further, the head unit may also providing tuning of HD RADIO™ , which is commercially available from iBiquity Digital Corporation of Delaware, MD. HD RADIO™ uses in-band on-channel (IBOC) information to improve the sound quality of both AM and FM broadcasts while adding features available with digital technology, such as displaying text or rich media on the radio face plate. Accordingly, HD RADIO™ is broadcast as "sideband" transmissions bracketing the top and bottom of a host analog signal in order to make optimal usage of the current spectrum allocations.

The satellite audio and video signals, A, V, received by the vehicular entertainment module 10, 100, 200 may be broadcast in any desirable band, such as, for example, the 2320-2345 MHz frequency band, which is the SDARS band. Accordingly, the satellite audio signals, A, may include any desirable programming, such as music, talk radio, and the like. User interface information associated with the satellite audio signals, A, such as station numbers, artist name, and the like is typically transmitted with the satellite audio signal, A, for representation on a user interface screen. The satellite video signals, V, may include any desirable video information, such as television programming, movies, video games, navigation information (e.g., maps), graphical representations (e.g., stock information), and the like. The satellite video signals, V, may be received by the receiver 22 and decoded by the audio and video data decoder 24 for output over the video screen 28, or, alternatively, the satellite video signals, V, may be downloaded into the hard drive/memory 32 for decoding and output at a desired time.

While the invention has been specifically described in connection with certain specific embodiments thereof, it is to be understood that this is by way of illustration and not of limitation

## Claims

1. A vehicular entertainment module (10, 100, 200), comprising:
a video screen (28) and audio reproducing devices (S, H);
an audio/video input device (30) that processes media (D) input by a user; and
a satellite antenna (20) and receiver (22) that receives satellite signals carrying both audio and video information for decoding by a single audio and video data decoder (24), wherein the video screen (28) and the audio reproducing devices (S, H) provide video and audio output from the audio/video input device (30) or the received satellite signals (A, V), based upon the decoded data from the single audio and video data decoder (24).

2. The vehicular entertainment module (10) according to Claim 1, wherein the satellite antenna (20) is located within the vehicular entertainment module (10) adjacent a vehicle roof (12).

3. The vehicular entertainment module (10) according to Claim 2, wherein the vehicle roof (12) includes a headliner (14), an outer metallic portion (16), and an outer non-metallic portion (18), wherein the satellite antenna (20) is positioned proximate the outer non-metallic portion (18).

4. The vehicular entertainment module (100) according to Claim 1, wherein the satellite antenna (20) is positioned in a remote location (150) from the vehicular entertainment module (100).

5. The vehicular entertainment module (100) according to Claim 4, wherein the remote location (150) is under a trunk lid, an exterior surface of a vehicle, behind an instrument panel, or within a side-view mirror housing.

6. The vehicular entertainment module (100) according to Claim 4 further comprising a second video screen (125) that is remotely located from the vehicular entertainment module, wherein the vehicular entertainment module (100) is located proximate a rear seat center console.

7. The vehicular entertainment module (200) according tc Claim 1, wherein the vehicular entertainment module (200) is located within a head unit (250) proximate a front dashboard area, wherein the head unit (250) includes one or more audio input devices (202, 204) and a tuner (206) for tuning audio being broadcast on a host analog signal broadcast on the 540-1700 kHz band, the 88.1-107.9 MHz band, the 174.240MHz band, or the 1452-1492MHz band.

8. The vehicular entertainment module (200) according to Claim 7, wherein the broadcast audio includes sideband transmissions for adding digital media and improving sound quality of the host analog signal.

9. The vehicular entertainment module (200) according to Claim 7, wherein the one or more audio input devices include a cassette player (202) and/or a compact disc player (204).

10. The vehicular entertainment module (10, 100, 200) according to Claim 1, wherein the audio/video input device (30) is a digital video disc player (30), wherein the media (D) is a digital video disc.

11. The vehicular entertainment module (10, 100, 200) according to Claim 1, wherein the audio/video input device (30) is a video game console (30), wherein the media (D) is video game programming.

12. The vehicular entertainment module (10, 100, 200) according to Claim 1, wherein the video output is television programming, a movie, a video game, navigation information, or graphical representations.

13. The vehicular entertainment module (10, 100, 200) according to Claim 1, wherein the satellite audio and video signals (A, V) are broadcast in the 2320-2345 MHz frequency band.

14. The vehicular entertainment module (10, 100, 200) according to Claim 1, wherein the audio and video data decoder (24) includes a processor that decodes audio and video originating from the audio/video input device (30), the satellite audio signals (A) and the satellite video signals (V).

15. The vehicular entertainment module (10, 100, 200) according to Claim 1, wherein the audio and video decoder (24) comprises a single processor wherein the single processor decodes audio and video originating from the audio/video input device (30), the satellite audio signals (A) and the satellite video signals (V).

## Patentansprüche

1. Fahrzeug-Unterhaltungsmodul (10, 100, 200), umfassend:
einen Videobildschirm (28) und Audiowiedergabevorrichtungen (S, H);
eine Audio-/Video-Eingabevorrichtung (30), die von einem Benutzer eingegebene Medien (D) verarbeitet; und
eine Satellitenantenne (20) und einen Empfänger (22), der Satellitensignale empfängt, die Audio- und Videoinformationen zum Dekodieren durch einen einzelnen Audio- und Videodaten-Dekodierer (24) tragen, wobei der Videobildschirm (28) und die Audiowiedergabevorrichtungen (S, H) Video- und Audioausgabe von der Audio-/Video-Eingabevorrichtung (30) oder den empfangenen Satellitensignalen (A, V) auf der Basis der dekodierten Daten von dem einzelnen Audio- und Videodaten-Dekodierer (24) bereitstellen.

2. Fahrzeugunterhaltungsmodul (10) nach Anspruch 1, bei dem die Satellitenantenne (20) in dem Fahrzeugunterhaltungsmodul (10) an ein Fahrzeugdach (12) angrenzend positioniert ist.

3. Fahrzeugunterhaltungsmodul (10) nach Anspruch 2, bei dem das Fahrzeugdach (12) eine Dachauskleidung (14), einen äußeren metallischen Teil (16) und einen äußeren nichtmetallischen Teil (18) aufweist, wobei die Satellitenantenne (20) nahe dem äußeren nichtmetallischen Teil (18) positioniert ist.

4. Fahrzeugunterhaltungsmodul (100) nach Anspruch 1, bei dem die Satellitenantenne (20) an einem vom Fahrzeugunterhaltungsmodul (100) abgesetzten Ort (150) positioniert ist.

5. Fahrzeugunterhaltungsmodul (100) nach Anspruch 4, bei dem der abgesetzte Ort (150) unter einem Kofferraumdeckel, einer Außenfläche eines Fahrzeugs, hinter einer Instrumententafel oder innerhalb eines Rückspiegelgehäuses ist.

6. Fahrzeugunterhaltungsmodul (100) nach Anspruch 4, ferner umfassend einen zweiten Videobildschirm (125), der vom Fahrzeugunterhaltungsmodul abgesetzt ist, wobei sich das Fahrzeugunterhaltungsmodul (100) nahe einer Rücksitzmittelkonsole befindet.

7. Fahrzeugunterhaltungsmodul (200) nach Anspruch 1, wobei das Fahrzeugunterhaltungsmodul (200) sich in einer Haupteinheit (250) nahe einem vorderen Armaturenbrettbereich befindet, wobei die Haupteinheit (250) eine oder mehrere Audio-Eingabevorrichtungen (202, 204) und einen Tuner (206) zum Einstellen von Audio, das auf einer Host-Analogsignalsendung auf dem 540-1700-kHz-Band, dem 88,1-107,9-MHz-Band, dem 174-240-MHz-Band oder dem 1452-1492-MHz-Band gesendet wird, aufweist.

8. Fahrzeugunterhaltungsmodul (200) nach Anspruch 7, bei dem das gesendete Audio Seitenbandübertragungen zum Hinzufügen von digitalen Medien und zum Verbessern der Klangqualität des Host-Analogsignals aufweist.

9. Fahrzeugunterhaltungsmodul (200) nach Anspruch 7, bei dem die eine oder mehreren Audio-Eingabevorrichtung(en) einen Kassettenspieler (202) und/oder einen CD-Spieler (204) aufweist bzw. aufweisen.

10. Fahrzeugunterhaltungsmodul (10, 100, 200) nach Anspruch 1, bei dem die Audio-/Video-Eingabevorrichtung (30) ein DVD-Spieler (30) ist, bei dem das Speichermedium (D) eine Digital Video Disc (DVD) ist.

11. Fahrzeugunterhaltungsmodul (10, 100, 200) nach Anspruch 1, bei dem die Audio-/Video-Eingabevorrichtung (30) eine Computerspielkonsole (30) ist, bei der das Speichermedium (D) eine Computerspielprogrammierung ist.

12. Fahrzeugunterhaltungsmodul (10, 100, 200) nach Anspruch 1, bei dem die Videoausgabe Fernsehprogrammierung, ein Kinofilm, ein Computerspiel, Navigationsinformationen oder grafische Darstellungen ist/sind.

13. Fahrzeugunterhaltungsmodul (10, 100, 200) nach Anspruch 1, bei dem die Satellitenaudio- und -videosignale (A, V) auf dem 2320-2345-MHz-Frequenzband gesendet werden.

14. Fahrzeugunterhaltungsmodul (10, 100, 200) nach Anspruch 1, bei dem der Audio- und Videodatendekodierer (24) einen Prozessor aufweist, der aus der Audio/Video-Eingabevorrichtung (30) stammendes Audio und Video, die Satellitenaudiosignale (A) und die Satellitenvideosignale (V) dekodiert.

15. Fahrzeugunterhaltungsmodul (10, 100, 200) nach Anspruch 1, bei dem der Audio- und Video-Dekodierer (24) einen einzelnen Prozessor umfasst, wobei der einzelne Prozessor aus der Audio/Video-Eingabevorrichtung (30) stammendes Audio und Video, die Satellitenaudiosignale (A) und die Satellitenvideosignale (V) dekodiert.

## Revendications

1. Module de divertissement pour véhicule (10, 100, 200), comprenant :
un écran vidéo (28) et des dispositifs de restitution audio (S, H) ;
un dispositif d'entrée audio/vidéo (30) qui traite des supports (D) entrés par un utilisateur ; et
une antenne satellite (20) et un récepteur (20) qui reçoit des signaux satellites portant à la fois des informations audio et des informations vidéo pour décodage par un unique décodeur de données (24) audio et vidéo, dans lequel l'écran vidéo (28) et les dispositifs de restitution audio (S, H) fournissent une sortie vidéo et audio depuis le dispositif d'entrée audio/vidéo (30) ou les signaux satellites reçus (A, V), en se basant sur les données décodées provenant de l'unique décodeur de données audio et vidéo (24).

2. Module de divertissement pour véhicule (10) selon la revendication 1, dans lequel l'antenne satellite (20) est située à l'intérieur du module de divertissement pour véhicule (10) en position adjacente à une toiture (12) du véhicule.

3. Module de divertissement pour véhicule (10) selon la revendication 2, dans lequel la toiture du véhicule (12) inclut un doublage (14), une portion métallique extérieure (16) et une portion non-métallique extérieure (18), ladite antenne satellite (20) étant positionnée à proximité de la portion non-métallique extérieure (18).

4. Module de divertissement pour véhicule (100) selon la revendication 1, dans lequel l'antenne satellite (20) est positionnée à un emplacement (150) à distance du module de divertissement pour véhicule (100).

5. Module de divertissement pour véhicule (100) selon la revendication 4, dans lequel l'emplacement à distance (150) se trouve au-dessous d'un couvercle de coffre, d'une surface extérieure du véhicule, derrière un tableau de bord, ou à l'intérieur d'un boîtier de rétroviseur latéral.

6. Module de divertissement pour véhicule (100) selon la revendication 4, comprenant en outre un second écran vidéo (125) qui est situé à distance du module de divertissement pour véhicule, et dans lequel le module de divertissement pour véhicule (100) est placé à proximité d'une console centrale de sièges arrière.

7. Module de divertissement pour véhicule (200) selon la revendication 1, dans lequel le module de divertissement pour véhicule (200) est situé dans une unité de tête (25) à proximité de la zone d'un tableau de bord avant, dans lequel l'unité de tête (250) inclut un ou plusieurs dispositifs d'entrée audio (202, 204) et un tuner (206) pour sélectionner les signaux audio qui sont radiodiffusés sur un signal analogique hôte émis dans la bande de 540 à 1700 kHz, la bande de 88,1 à 107,9 MHz, la bande de 174 à 240 MHz, ou la bande de 1452 à 1492 MHz.

8. Module de divertissement pour véhicule (200) selon la revendication 7, dans lequel le signal audio radiodiffusé inclut des transmissions à bande latérale pour ajouter des informations numériques et améliorer la qualité sonore du signal analogique hôte.

9. Module de divertissement pour véhicule (200) selon la revendication 9, dans lequel lesdits un ou plusieurs dispositifs d'entrée audio incluent un lecteur de cassettes (202) et/ou un lecteur de disques compacts (204).

10. Module de divertissement pour véhicule (10, 100, 200) selon la revendication 1, dans lequel le dispositif d'entrée audio/vidéo (30) est un lecteur de disque vidéo numérique (30), le support (D) étant un DVD.

11. Module de divertissement pour véhicule (10, 100, 200) selon la revendication 1, dans lequel le dispositif d'entrée audio/vidéo (30) est une console de jeux vidéo (30), le support (D) étant un programme de jeu vidéo.

12. Module de divertissement pour véhicule (10, 100, 200) selon la revendication 1, dans lequel la sortie vidéo est un programme de télévision, un film, un jeu vidéo, des informations de navigation, ou des représentations graphiques.

13. Module de divertissement pour véhicule (10, 100, 200) selon la revendication 1, dans lequel les signaux satellites audio et vidéo (A, V) sont radiodiffusés dans la bande de fréquences de 2320 à 2345 MHz.

14. Module de divertissement pour véhicule (10, 100, 200) selon la revendication 1, dans lequel le décodeur de données audio et vidéo (24) inclut un processeur qui décode les signaux audio et vidéo provenant du dispositif d'entrée audio/vidéo (30), les signaux audio satellite (A) et les signaux vidéo satellite (V).

15. Module de divertissement pour véhicule (10, 100, 200) selon la revendication 1, dans lequel le décodeur audio et vidéo (24) comprend un processeur unique, ledit processeur unique décodant les signaux audio et vidéo provenant du dispositif d'entrée audio/vidéo (30), les signaux audio satellite (A) et les signaux vidéo satellite (V).
